# EUROPÄISCHE PATENTSCHRIFT

(11) **EP 0 604 389 B1**
(45) Veröffentlichungstag und Bekanntmachung des Hinweises auf die Patenterteilung: **25.02.1998**
(21) Anmeldenummer: 93890248.3
(22) Anmeldetag: 17.12.1993
(51) Int. Cl.: B61K 9/06, G01J 5/08

(54) **Einrichtung zum Erkennen unzulässig erwärmter Bauteile bzw. Stellen an bewegten Objekten**
Device for the detection of unacceptably heated components or spots on moving objects
Dispositif de détection des parties ou zones inacceptablement échauffées sur des objets en mouvement

(30) Priorität: 21.12.1992 AT 2531/92
(43) Veröffentlichungstag der Anmeldung: 29.06.1994
(73) Patentinhaber: VAE Aktiengesellschaft, 1010 Wien (AT)
(72) Erfinder: Dührkoop, Jens, Dipl.-Ing., D-22587 Hamburg (DE)
(74) Vertreter: Haffner, Thomas M., Dr.

(56) Entgegenhaltungen:
- EP-A- 0 041 178
- EP-A- 0 263 896
- EP-A- 0 264 360
- EP-A- 0 424 570
- AT-B- 390 928

## Beschreibung

Die Erfindung bezieht sich auf eine Einrichtung zum Erkennen unzulässig erwärmter Bauteile bzw. Stellen an bewegten Objekten, insbesondere an fahrenden Schienenfahrzeugen, wie z.B. Lager, Bremsen und/oder Radkränze, mit wenigstens einem IR-Strahlungsdetektor und optischen Einrichtungen zur Abbildung der Meßstelle auf dem Strahlungsdetektor, wobei auf jede Meßstelle ein gesondertes Objektiv gerichtet ist und zwischen den Objektiven und dem Detektor eine die Meßstrahlen periodisch erfassende Abtastvorrichtung angeordnet ist, welche die Meßstrahlen auf einen für alle Meßstellen gemeinsamen Detektor fokussiert.

Einrichtungen der eingangs genannten Art werden beispielsweise für die Ortung von Heißläufern herangezogen. Aus der EP-A1 41178 ist eine Einrichtung der genannten Art bekanntgeworden, mit welcher nicht nur Heißläufer, d.h. heißgelaufene Lager, sondern auch Radkränze bzw. Bremsen an fahrenden Eisenbahnwagen erfaßt werden können. Bei dieser bekannten Einrichtung sind zwei gesonderte Infrarotstrahlendetektoren mit entsprechenden Abbildungseinrichtungen in einem gemeinsamen Gehäuse angeordnet. Eine weitere Ausführungsform dieser bekannten Einrichtung beschränkte sich auf nur einen Infrarotstrahlendetektor, dessen Meßstrahl in Höhe der Radnabe schräg auf das vorbeilaufende Rad trifft und daher zeitlich nacheinander die Temperatur des Radkranzes bzw. der Bremse und die Lagertemperatur mißt. Eine derartige Ausbildung mit nur einem Infrarotstrahlungsdetektor ist allerdings in der Regel nicht dazu geeignet, Heißläufer und defekte Bremsen eines Rades mit einer gemeinsamen Vorrichtung zu erfassen. Schließlich ist bei dem gemeinsamen Erfassen unterschiedlich erwärmter Bauteile mit nur einem IR-Strahlungsdetektor noch zu berücksichtigen, daß zu große Temperaturunterschiede die Meßergebnisse für voneinander verschiedene Meßstellen bei entsprechend rascher Abfolge der Meßwerte bis zur Unbrauchbarkeit verzerren können. In Auswertungsschaltungen werden üblicherweise Schwellwertschalter verwendet, welche naturgemäß bei entsprechend verzerrten Meßwerten keine sinnvolle Zuordnung der Signale zu den Meßstellen ergeben und gegebenenfalls verspätete Warnungen erzeugen.

Aus der EP-A 0 424 570 ist eine Ausbildung zu entnehmen, bei welcher mehrere Objektive auf unterschiedliche Positionen vorüberfahrender Schienenfahrzeuge gerichtet sind, wobei für eine Schonung der Auswerteelektronik zwischen den Objektiven und einem gemeinsamen Detektor Lichtleiter angeordnet sind, wodurch eine größere räumliche Trennung zwischen den Objektiven und der Auswerteeinheit möglich wird.

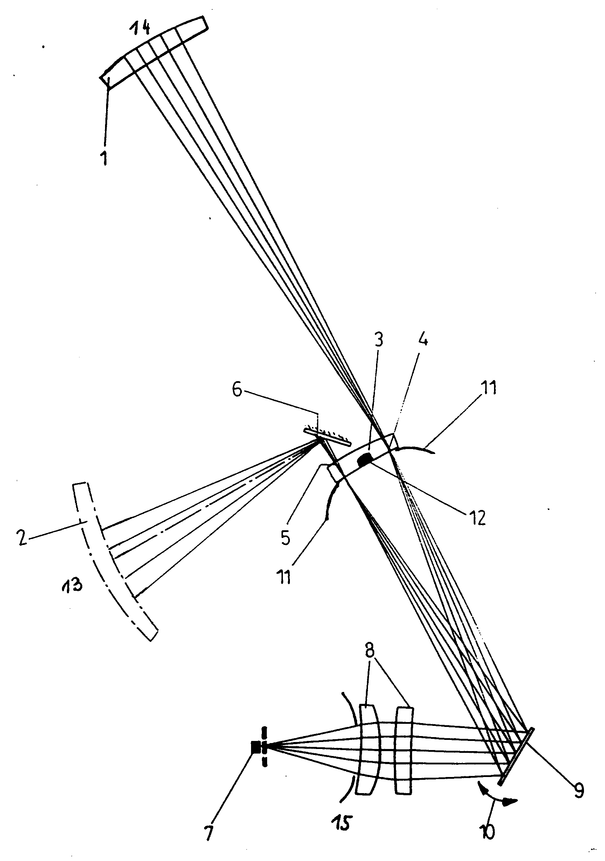

Die Erfindung zielt nun darauf ab, eine Einrichtung der eingangs genannten Art zu schaffen, bei welcher mit nur einem IR-Strahlungsdetektor unterschiedliche Meßstellen bewegter Objekte mit gegebenenfalls stark voneinander verschiedenen Temperaturmeßwerten sicher erfaßt und gesondert ausgewertet werden können. Zur Lösung dieser Aufgabe besteht die erfindungsgemäße Ausbildung im wesentlichen darin, daß die Objektive Bilder der Meßstellen auf voneinander verschiedene Stellen eines zwischen den Objektiven und dem Detektor angeordneten, von einer Linse oder einem Linsensystem gebildeten Abbildungs-Korrektursystems fokussieren, und daß zwischen dem Abbildungs-Korrektursystem und dem Detektor die die Meßstrahlen periodisch erfassende Abtastvorrichtung angeordnet ist. Dadurch, daß das Bild der Meßstellen auf voneinander verschiedene Stellen eines Abbildungs-Korrektursystems fokussiert wird, wird zunächst die Möglichkeit geschaffen, voneinander verschiedene Meßstellen exakt voneinander zu trennen. Für jede Meßstelle ist hierbei ein gesondertes Objektiv vorgesehen und die Maßnahme, gesonderte Objektive zu verwenden, ermöglicht es, unterschiedlichen geometrischen Gegebenheiten und insbesondere weit voneinander liegenden Meßstellen sicher Rechnung zu tragen. Die Abbildung auf einem Abbildungs-Korrektursystem liefert exakt definierte Bereiche, auf welchen der jeweilige Meßstrahl zur Verfügung steht und dadurch, daß eine auslenkende Abtastvorrichtung Verwendung findet, welche so angeordnet ist, daß die Meßstrahlen auf dem Abbildungs-Korrektursystem periodisch erfaßt werden, wird es möglich, in Übereinstimmung mit der Frequenz der periodischen Auslenkung abwechselnd unterschiedliche Meßstrahlen auf den IR-Detektor zu lenken. Zu diesem Zweck ist anschließend an das Abbildungs-Korrektursystem, auf welcher die Meßstrahlen fokussiert sind, neuerlich ein optisch abbildendes Linsensystem (IR-Transformationssystem) vorgesehen, welches den periodisch erfaßten Meßstrahl auf den gemeinsamen Detektor fokussiert. Dadurch, daß gesonderte Objektive zum Einsatz gelangen, wird es möglich, auch unterschiedlich hohen Meßtemperaturen ohne Überlastung des IR-Detektors durch entsprechende Abblendung oder Aufblendung sicher zu beherrschen, so daß insgesamt am IR-Strahlungsdetektor keine übermäßigen Temperaturschwankungen, welche zu Verzögerung und Verschlechterungen der Meßwerte Anlaß geben könnten, auftreten.

Mit Vorteil wird zur Unterscheidung der voneinander verschiedenen Meßstrahlen die Ausbildung so getroffen, daß das Abbildungs-Korrektursystem an seiner dem Detektor zugewandten Seite an wenigstens einer Stelle spiegelnd ausgebildet ist. Eine derartige spiegelnde Stelle des Abbildungs-Korrektursystems kann zur Autokollimation des gekühlten IR-Strahlungsdetektors Verwendung finden, so daß ein interner Temperaturabgleich (Referenztemperatur) ermöglicht wird. Gleichzeitig kann aber ein derartiger interner Temperaturabgleich durch Abbildung des gekühlten IR-Strahlungsdetektors auf sich selbst als Trägersignal für die Auswertung verwendet werden und dazu beitragen, daß aufeinanderfolgende voneinander verschiedene Meßstellen deutlich voneinander unterschieden werden können. Zu diesem Zweck ist die Ausbildung mit Vorteil so getroffen, daß der dem IR-Detektor zugewandte, spiegelnde Bereich des Abbildungs-Korrektursystems zwischen voneinander verschiedenen Abbildungsstellen verschiedener Objektive auf dem weiteren Abbildungs-Korrektursystem angeordnet ist.

Für den inneren Temperaturabgleich bzw. zur Bestimmung einer Referenztemperatur und zur Vermeidung innerer thermischer Störstrahlungen ist vorzugsweise die Abbildung so getroffen, daß an der dem IR-Detektor zugewandten Seite des Abbildungs-Korrektursystems und gegebenenfalls des weiteren Abbildungs-Korrektursystems spiegelnde Elemente, insbesondere Hohlspiegel, angeordnet sind. Dadurch gelingt es, Störstrahlungen auf dem Detektor zu verhindern, wobei die spiegelnden Elemente, insbesondere Hohlspiegel, im Radius beispielsweise derart ausgestaltet sind, daß sie eine Autokollimation vom Detektor her gesehen bewirken. Gleichzeitig wird mit dieser Maßnahme eine Aperturbegrenzung erreicht, wobei dies eine erheblich höhere Detektionsempfindlichkeit mit sich bringt, was insbesondere bei niedrigen, zu messenden Temperaturen einen günstigen Einfluß auf das Meßsignal hat.

Um sicherzustellen, daß eine thermische Signalübersteuerung im wesentlichen der Nachfolgeelektronik des IR-Strahlungsdetektors in allen Situationen und insbesondere bei stark unterschiedlich erwärmten Bauteilen verhindert wird, ist die Ausbildung mit Vorteil so getroffen, daß in den Strahlengang zu einem auf Bereiche hoher Temperatur, insbesondere Bremsklötze oder Radkränze gerichteten Objektiv wenigstens ein Abschwächungsfilter, insbesondere ein teilreflektierender Spiegel, eingeschaltet ist.

Bei Messung von unterschiedlichen Positionen an einem bewegten Objekt, wie beispielsweise den Randkränzen und Bremsen, ist ein unterschiedlicher Meßwinkel vom Objektiv her erforderlich, um den optimalen Meßort zu erhalten. Daher muß der empfangene Meßstrahl in den Meßkoordinaten zum Objekt justierbar sein, so daß der optische Weg über das Abbildungs-Korrektursystem zum Detektor gewährleistet ist. Eine derartige Justierung ist in einfacher Weise dadurch realisierbar, daß das Abschwächungsfilter relativ zur Meßstelle und/oder zum Objektiv verstellbar und in mehreren Koordinaten justierbar ist, wie dies einer bevorzugten Ausführungsform der Erfindung entspricht.

Um eine Anpassung an unterschiedlich hohe Temperaturen zu ermöglichen, ist gemäß einer bevorzugten Ausführungsform das Abschwächungsfilter als dichroitischer oder IR-optisch angepaßter Spiegel ausgebildet, welcher auf die energetischen Strahlungsverhältnisse abgestimmt ist. Durch entsprechende Wahl der Reflexion im verwendeten Wellenbereich kann z.B. bei Messung der Temperatur von Radkranz oder Bremsen diese Reflexion bei etwa 3 bis 10 % unter Berücksichtigung des Einfallswinkels gewählt werden, so daß durch den geringen Reflexionsgrad eine Überbeanspruchung des Detektors vermieden wird. Zu diesem Zweck eignet sich beispielsweise eine unvergütete Saphirscheibe oder CaF₂ mit Rückseitenschwärzung.

Gemäß einer weiteren bevorzugten Ausführungsform ist die Ausbildung so getroffen, daß die Abtastvorrichtung als Schwenkspiegel oder strahldrehendes Element, insbesondere Prisma, ausgebildet ist. Dadurch gelingt ein einfaches Abtasten unterschiedlicher Meßstellen, wobei bei Verwendung eines strahldrehenden Elementes, beispielsweise eines 90°-Prismas zusätzlich die Strahl-Scanrichtung eines Abtastvorganges geändert werden kann.

Wie oben angedeutet, wird dadurch, daß am Abbildungs-Korrektursystem an der dem Detektor zugewandten Seite an wenigstens einer Stelle ein verspiegelter Bereich ausgebildet ist und daß weiters gegebenenfalls spiegelnde Elemente bzw. Hohlspiegel vorgesehen sind, eine Autokollimation und somit die Bestimmung einer Referenztemperatur ermöglicht. Um eine ordnungsgemäße Trennung der Referenztemperatur von der zu messenden Temperatur bzw. der einzelnen zu messenden Temperaturen und eine Korrektur mit der Referenztemperatur auch in kürzester Zeit zu ermöglichen, ist die Ausbildung bevorzugt so getroffen, daß als IR-Detektoren HgTe : HgCd- oder PbSe-Detektoren eingesetzt sind, wobei diese Detektoren sich durch eine äußerst kurze Anstiegszeit bzw. Ansprechzeit auszeichnen, welche allgemein unter 5 µs liegt, so daß auch bei rasch bewegten Objekten eine sichere Messung erfolgen kann.

Die Erfindung wird nachfolgend an Hand einer in der Zeichnung schematisch dargestellten Ausführung einer erfindungsgemäßen Einrichtung zur Bestimmung von unzulässig erwärmten Stellen an fahrenden Schienenfahrzeugen näher erläutert.

In der Zeichnung ist mit 1 ein erstes, beispielsweise auf ein Lager gerichtetes Objektiv bezeichnet. Ein zweites Objektiv 2 kann auf Bremsen, Radkränze od.dgl. orientiert sein. Das Objektiv 1 fokussiert die Meßstrahlen auf ein Abbildungs-Korrektursystem 3, während die vom Objektiv 2 erfaßten Meßstrahlen an einer von der Fokussierstelle 4 der ersten Meßstrahlen verschiedenen Fokussierstelle 5 des Abbildungs-Korrektursystems 3 auftreffen. Um gleichzeitig gegebenenfalls vorhandenes Streulicht vom Objektiv 1 sicher auszublenden, muß der Teilbereich des Abbildungs-Korrektursystems 3, in welchem die Fokussierstelle 5 liegt, gegenüber dem Objektiv 1 vollständig abgedunkelt bzw. abgeschattet sein, wofür mit Vorteil ein Umlenkspiegel 6 Verwendung findet. Ein derartiger Umlenkspiegel 6 kann insbesondere dann, wenn er als teilreflektierender Spiegel, beispielsweise dichroitischer Spiegel, ausgebildet ist, gleichzeitig dazu dienen, die maximal auf das Abbildungs-Korrektursystem 3 treffende, fokussierte Strahlung zu begrenzen.

Zwischen Abbildungs-Korrektursystem 3 und dem Detektor 7 ist neuerlich ein optisches Abbildungssystem bestehend aus Linsen 8 angeordnet, welches dafür Sorge trägt, daß die Fokussierbereiche 4 und 5 auf dem Detektor 7 abgebildet werden können. Ein zyklisches Abtasten der beiden Fokussierstellen 4 und 5 auf dem Abbildungs-Korrektursystem 3 wird durch einen Schwenkspiegel 9 bewirkt, dessen Schwenkbewegung im Sinne des Doppelpfeiles 10 so gewählt ist, daß abwechselnd die Fokussierstellen 4 und 5 auf den IR-Detektor 7 abgebildet werden. Die Auslenkung wird dabei so begrenzt, daß Streustrahlungen nicht auf den Detektor 7 gelangen, wofür seitlich am Rand des Abbildungs-Korrektursystems 3 und Transformationssystem 8 verspiegelte Bereiche 11 und ein Hohlspiegel 15 vorgesehen sein können.

Bei der Ausbildung nach der schematischen Zeichnung ist an dem Abbildungs-Korrektursystem 3 und insbesondere der dem Detektor zugewandten Seite des Abbildungs-Korrektursystems 3 zwischen den beiden Fokussierstellen 4 und 5 ein spiegelnder Bereich 12 vorgesehen. Bei Verschwenken des Schwenkspiegels 9 wird auch dieser verspiegelte Bereich abgetastet und in diesem Bereich wird die Temperatur des gekühlten Detektors 7 auf den Detektor 7 abgebildet, so daß eine Autokollimation erzielt wird. Dieses der Autokollimation entsprechende Meßsignal (Referenztemperatur) kann in der Auswerteelektronik zur Umschaltung der Auswertung der Temperaturmeßwerte für die Fokussierstellen 4 und 5 und damit für die Bilder der Objektive 1 und 2 herangezogen werden.

Die Ausbildung kann naturgemäß auch eine Mehrzahl von voneinander verschiedenen Meßstellen erfassen, wobei jeweils die von einem gesonderten Objektiv aufgenommenen Meßstrahlen auf eine im Scanweg der periodisch auslenkenden Abtastvorrichtung an voneinander verschiedenen Stellen liegende Fokussierstelle des Abbildungs-Korrektursystems fokussiert werden.

Bei der Messung von Radlagern, wie dies durch 14 angedeutet ist, ist der Objektivdurchmesser allgemein größer als der Durchmesser des Strahlenbündels, welches genau im Zentrum des Objektivs 1 seinen Ablenkort hat. Hingegen wird für die Messung der Radkränze und der Bremsen mit dem Objektiv 2, wie dies durch 13 angedeutet ist, ein unterschiedlicher Meßwinkel vom Objektiv her erforderlich, um einen optimalen Meßort am Radreifen bzw. der Bremse zu erhalten. Daher muß der empfangene Meßstrahl in der Meßhöhe zum Objekt justierbar sein, wobei dies z.B. in einfacher Weise dadurch gelingt, das Abschwächungsfilter bzw. der Strahlteiler 6 in der Höhe zu verstellen, so daß der Meßstrahl demnach einen anderen Ort der Ablenkung im Objektiv 2 nimmt. Da sich der Ablenkpunkt 14 im Normalfall immer im Zentrum des Objektives befindet, kann je nach Durchmesser des Objektives das Sehfeld des Detektors andere Meßorte berücksichtigen. Durch die Anordnung und Ausgestaltung des Abbildungs-Korrektursystems 3 wirkt es in beiden Koordinaten gleichermaßen, so daß der Ort des Strahlenganges innerhalb der Objektivfläche 13 keine Rolle spielt.

Durch die verspiegelten Bereiche 11 und den Hohlspiegel 15 wird hierbei nicht nur verhindert, daß Streustrahlungen auf den Detektor 7 gelangen, sondern es kann gleichzeitig, wie oben bereits angedeutet, eine Autokollimation vom Detektor 7 her gesehen vorgenommen werden. Durch den Hohlspiegel 15 wird neben der Ermöglichung der Bestimmung einer Referenztemperatur eine Aperturbegrenzung erreicht, wodurch auch bei niedrigen zu messenden Temperaturen eine erheblich höhere Detektionsempfindlichkeit erzielbar ist.

Anstelle des Schwenkspiegels 9 bzw. zusätzlich zu diesem kann ein strahlendrehendes Element, beispielsweise 90°-Prisma, vorgesehen sein, um die Strahl-Scanrichtung zu ändern.

Über den IR-spiegelnden Streifen 12 im Abbildungs-Korrektursystem 3, welches anstelle der dargestellten Einzellinse auch aus einer Mehrzahl von aufeinander abgestimmten Linsen bzw. Abbildungselementen bestehen kann, und der durch den Hohlspiegel möglichen Autokollimation läßt sich neben einer Trennung der einzelnen zu messenden Temperaturen unterschiedlicher Bereiche auch eine Referenztemperatur zur Korrektur des Meßsignales erzielen. Hierbei ist es bei rasch bewegten Objekten jedoch erforderlich, daß die Trennungen und Auswertungen bzw. Bestimmungen der einzelnen Temperaturen in kürzester Zeit möglich sind, wodurch Detektoren mit äußerst kurzer Anstiegs- bzw. Ansprechzeit erforderlich sind. Besonders geeignet sind zu diesem Zweck HgTe : HgCd(CMT)- oder PbSe-Detektoren, deren Ansprechzeiten unter 5 µs liegen.

## Patentansprüche

1. Einrichtung zum Erkennen unzulässig erwärmter Bauteile bzw. Stellen an bewegten Objekten, insbesondere an fahrenden Schienenfahrzeugen, wie z.B. Lager, Bremsen und/oder Radkränze, mit wenigstens einem IR-Strahlungsdetektor und optischen Einrichtungen zur Abbildung der Meßstelle auf dem Strahlungsdetektor, wobei auf jede Meßstelle ein gesondertes Objektiv gerichtet ist und zwischen den Objektiven und dem Detektor eine die Meßstrahlen periodisch erfassende Abtastvorrichtung angeordnet ist, welche die Meßstrahlen auf einen für alle Meßstellen gemeinsamen Detektor fokussiert, dadurch gekennzeichnet, daß die Objektive (1, 2) Bilder der Meßstellen auf voneinander verschiedene Stellen (4, 5) eines zwischen den Objektiven und dem Detektor angeordneten, von einer Linse oder einem Linsensystem gebildeten Abbildungs-Korrektursystems (3) fokussieren, und daß zwischen dem Abbildungs-Korrektursystem (3) und dem Detektor (7) die die Meßstrahlen periodisch erfassende Abtastvorrichtung (9) angeordnet ist.

2. Einrichtung nach Anspruch 1, dadurch gekennzeichnet, daß das Abbildungs-Korrektursystem (3) an seiner dem Detektor (7) zugewandten Seite an wenigstens einer Stelle (12) spiegelnd ausgebildet ist.

3. Einrichtung nach Anspruch 1 oder 2, dadurch gekennzeichnet, daß in den Strahlengang zu einem auf Bereiche hoher Temperatur, insbesondere Bremsklötze oder Radkränze, gerichteten Objektiv wenigstens ein Abschwächungsfilter, insbesondere ein teilreflektierender Spiegel (6), eingeschaltet ist.

4. Einrichtung nach Anspruch 3, dadurch gekennzeichnet, daß das Abschwächungsfilter (6) relativ zur Meßstelle und/oder zum Objektiv (2) verstellbar, insbesondere in mehreren Koordinaten justierbar ist.

5. Einrichtung nach Anspruch 3 oder 4, dadurch gekennzeichnet, daß das Abschwächungsfilter als dichroitischer oder IR-optisch angepaßter Spiegel (6) ausgebildet ist.

6. Einrichtung nach einem der Ansprüche 1 bis 5, dadurch gekennzeichnet, daß der dem IR-Detektor (7) zugewandte, spiegelnde Bereich des Abbildungs-Korrektursystems (3) zwischen voneinander verschiedenen Abbildungsstellen verschiedener Objektive (1, 2) auf dem weiteren Abbildungs-Korrektursystem angeordnet ist.

7. Einrichtung nach einem der Ansprüche 1 bis 6, dadurch gekennzeichnet, daß an der dem IR-Detektor (7) zugewandten Seite des Abbildungs-Korrektursystems (3) und gegebenenfalls des weiteren Abbildungs-Korrektursystems (3) spiegelnde Elemente (11, 15), insbesondere Hohlspiegel, angeordnet sind.

8. Einrichtung nach einem der Ansprüche 1 bis 7, dadurch gekennzeichnet, daß die Abtastvorrichtung als Schwenkspiegel (9) oder strahldrehendes Element, insbesondere Prisma, ausgebildet ist.

9. Einrichtung nach einem der Ansprüche 1 bis 8, dadurch gekennzeichnet, daß als IR-Detektoren (7) HgTe : HgCd- oder PbSe-Detektoren eingesetzt sind.

## Claims

1. A device for detecting inadmissibly heated structural components or spots on moving objects, in particular, moving rail vehicles, such as, e.g., bearings, brakes and/or wheel rims or flanges, including at least one IR radiation detector and optical means for imaging the measuring site on the radiation detector, wherein a separate objective is directed onto each of the measuring sites and a scanning means periodically scanning the measuring rays and focussing the measuring rays on a detector common to all of the measuring sites is arranged between the objectives and the detector, characterized in that the objectives (1, 2) focus images of the measuring sites on different sites (4, 5) of an imaging correction system (3) arranged between the objectives and the detector and comprised of a lens or a lens system, and that the scanning means (9) periodically scanning the measuring rays is arranged between the imaging correction system (3) and the detector (7).

2. A device according to claim 1, characterized in that the imaging correction system (3), on its side facing the detector (7), is designed to be reflective on at least one site (12).

3. A device according to claim 1 or 2, characterized in that at least one attenuation filter, in particular, a partially reflecting mirror (6) is inserted in the path of rays to an objective directed onto high-temperature regions, in particular, brake blocks or wheel flanges.

4. A device according to claim 3, characterized in that the attenuation filter (6) is displaceable relative to the measuring site and/or the objective (2) and, in particular, adjustable in several coordinates.

5. A device according to claim 3 or 4, characterized in that the attenuation filter is designed as a dichroic or IR-optically adapted mirror (6).

6. A device according to any one of claims 1 to 5, characterized in that the reflecting region of the imaging correction system (3), that faces the IR detector (7) is arranged between distinct imaging sites of different objectives (1, 2) on the further imaging correction system.

7. A device according to any one of claims 1 to 6, characterized in that reflecting elements (11, 15), in particular, concave mirrors, are arranged on the side facing the IR detector (7), of the imaging correction system (3) and optionally of the further imaging correction system (3).

8. A device according to any one of claims 1 to 7, characterized in that the scanning means is designed as an oscillating mirror (9) or a ray turning element and, in particular, a prism.

9. A device according to any one of claims 1 to 8, characterized in that HgTe:HgCd or PbSe detectors are used as IR detectors (7).

## Revendications

1. Dispositif de détection des parties ou zones inacceptablement échauffées sur des objets en mouvement, notamment sur des véhicules ferroviaires en déplacement, telles que par exemple paliers, freins et/ou jantes, comprenant au moins un détecteur de rayonnement infrarouge et des dispositifs optiques servant à la formation d'image de l'emplacement de mesure sur le détecteur de rayonnement, tandis qu'un objectif particulier est dirigé sur chaque emplacement de mesure et qu'un dispositif d'analyse capturant périodiquement les faisceaux de mesure est disposé entre les objectifs et le détecteur, le dispositif d'analyse focalisant les faisceaux de mesure sur un détecteur commun à tous les emplacements de mesure, caractérisé en ce que les objectifs (1, 2) focalisent des images des emplacements de mesure sur des emplacements (4, 5), différents l'un de l'autre, d'un système de correction de formation d'image (3) disposé entre les objectifs et le détecteur et formé d'une lentille ou d'un système de lentilles et en ce que le dispositif d'analyse (9) captant périodiquement les faisceaux de mesure est disposé entre le système de correction de formation d'image (3) et le détecteur (7).

2. Dispositif suivant la revendication 1, caractérisé en ce que le système de correction de formation d'image (3) est réalisé réfléchissant, en au moins un emplacement (12), sur sa face tournée vers le détecteur (7).

3. Dispositif suivant la revendication 1 ou 2, caractérisé en ce qu'au moins un filtre d'affaiblissement, notamment un miroir (6) à réflexion partielle, est interposé sur le trajet de faisceau menant à un objectif dirigé sur des zones à température élevée, notamment plaquettes de frein ou jantes.

4. Dispositif suivant la revendication 3, caractérisé en ce que le filtre d'affaiblissement (6) est réglable par rapport à l'emplacement de mesure et/ou l'objectif (2), notamment est ajustable suivant plusieurs coordonnées.

5. Dispositif suivant la revendication 3 ou 4, caractérisé en ce que le filtre d'affaiblissement est réalisé sous forme d'un miroir (6) dichroïque ou à adaptation optique infrarouge.

6. Dispositif suivant l'une des revendications 1 à 5, caractérisé en ce que la zone réfléchissante du système de correction de formation d'image (3) qui est tournée vers le détecteur infrarouge (7) est disposée entre des emplacements de formation d'image, différents l'un de l'autre, de différents objectifs (1, 2) sur l'autre système de correction de formation d'image.

7. Dispositif suivant l'une des revendications 1 à 6, caractérisé en ce que des éléments réfléchissants (11, 15), notamment des miroirs concaves, sont disposés sur la face du système de correction de formation d'image (3), et éventuellement de l'autre système de correction de formation d'image (3), qui est tournée vers le détecteur infrarouge (7).

8. Dispositif suivant l'une des revendications 1 à 7, caractérisé en ce que le dispositif d'analyse est réalisé sous forme d'un miroir orientable (9) ou d'un élément faisant tourner les faisceaux, notamment un prisme.

9. Dispositif suivant l'une des revendications 1 à 8, caractérisé en ce que des détecteurs HgTe : HgCd ou PbSe sont utilisés en tant que détecteurs infrarouge (7).
